# EUROPÄISCHE PATENTANMELDUNG

(11) **EP 2 941 962 A1**
(43) Veröffentlichungstag der Anmeldung: **11.11.2015**
(21) Anmeldenummer: 14166963.0
(22) Anmeldetag: 05.05.2014
(51) Int. Cl.: A23G 1/04, A23G 1/20, A23G 3/02

(54) **Süßwarenmassendosiereinheit mit einem reversierend drehend angetriebenen Drehkolben**

(71) Anmelder: Sollich KG, 32105 Bad Salzuflen (DE)
(72) Erfinder: Stolpe, Kersten, 32107 Bad Salzuflen (DE); Sewing, Nico, 33824 Werther (DE)
(74) Vertreter: REHBERG HÜPPE + PARTNER

(57) **Zusammenfassung**

Eine Vorrichtung (30) zum Dosieren einer Süßwarenmasse weist eine Mehrzahl von nebeneinander angeordneten Süßwarenmassendosiereinheiten (1) auf. Die Süßwarenmassendosiereinheiten (1) weisen jeweils einen reversierend drehend angetriebenen Drehkolben (3) zum abwechselnden Befüllen einer Dosierkammer (26) mit Süßwarenmasse und Verdrängen der Süßwarenmasse aus der Dosierkammer (26) auf. Die Vorrichtung (1) wird insbesondere mittels Servomotoren (34, 35) zum Ausführen eines Befüllungstakts und eines Verdrängungstakts betrieben.

## Beschreibung

### TECHNISCHES GEBIET DER ERFINDUNG

Die Erfindung betrifft eine Süßwarenmassendosiereinheit, eine Vorrichtung zum Dosieren einer Süßwarenmasse mit einer Mehrzahl von Süßwarenmassendosiereinheiten und ein Verfahren zum Dosieren einer Süßwarenmasse.

Süßwarenmassendosiereinheiten dienen zur Abgabe einer definierten Masse bzw. eines definierten Volumens einer Süßwarenmasse aus einem Süßwarenmassenreservoir während der Herstellung von Süßwaren. Bei der Süßwarenmasse handelt es sich insbesondere um eine Fett und/oder Zucker und/oder Zuckerersatzstoffe enthaltende Masse. Beispiele hierfür sind Karamell, Fondant, Schokolademasse, Fettglasur usw. Die dosierte Portion der Süßwarenmasse stellt dann insbesondere das fertige Süßwarenprodukt selbst, eine Füllung des fertigen Süßwarenprodukts oder ein Topping des fertigen Süßwarenprodukts dar.

Um das gleichzeitige Dosieren einer Mehrzahl von Portionen der Süßwarenmasse zu ermöglichen, weist die Vorrichtung eine Mehrzahl derartiger Süßwarenmassendosiereinheiten auf. Die Vorrichtung kann dann insbesondere relativ zu einem Förderband taktweise bewegt werden, um die Dosierung innerhalb eines automatisierten Herstellungsverfahrens durchzuführen.

### STAND DER TECHNIK

Aus der europäischen Patentanmeldung EP 0 122 369A2ist eine Vorrichtung zum Dosieren einer Süßwarenmasse mit einer Mehrzahl von Süßwarenmassendosiereinheiten bekannt. Jede der Süßwarenmassendosiereinheiten weist einen Drehkolben zum abwechselnden Befüllen einer Dosierkammer mit Süßwarenmasse und Verdrängen der Süßwarenmasse aus der Dosierkammer auf. Dafür ist der Drehkolben in einer Drehrichtung f relativ zu einem Grundkörper angetrieben. Während seiner wiederholt um 360° erfolgenden Drehung kann der Drehkolben in zwei Positionen angehalten werden, nämlich bei 12 Uhr und bei etwa 8 Uhr.

Die Süßwarenmassendosiereinheit weist ein Auslassventil auf, welches gemeinsam mit dem Drehkolben und einem Teil des Grundkörpers eine Dosierkammer zur Aufnahme der Süßwarenmasse bildet. In der geöffneten Stellung des Auslassventils führt die Drehung des Drehkolbens in der Drehrichtung f zum Verdrängen der Süßwarenmasse aus der Dosierkammer, durch das geöffnete Auslassventil und durch eine Auslassöffnung. In der geschlossenen Stellung des Auslassventils führt die fortgesetzte Drehbewegung des Drehkolbens in der Drehrichtung f dann zu einem Ansaugen von Süßwarenmasse aus einer Massevorlage in die Dosierkammer.

Die Süßwarenmassendosiereinheiten sind in der Vorrichtung derart hintereinander angeordnet, dass ihre Drehkolben über eine gemeinsame Drehachse verfügen.

### AUFGABE DER ERFINDUNG

Der Erfindung liegt die Aufgabe zugrunde, eine Süßwarenmassendosiereinheit, eine Vorrichtung mit einer Mehrzahl von Süßwarenmassendosiereinheiten und ein Verfahren zum Dosieren einer Süßwarenmasse mittels einer solchen Vorrichtung bereitzustellen, mit denen die Süßwarenmasse portionsgenau, schnell und schonend dosiert werden kann.

### LÖSUNG

Die Aufgabe der Erfindung wird erfindungsgemäß mit den Merkmalen der unabhängigen Patentansprüche gelöst.

Weitere bevorzugte erfindungsgemäße Ausgestaltungen sind den abhängigen Patentansprüchen zu entnehmen.

### BESCHREIBUNG DER ERFINDUNG

Die Erfindung betrifft eine Süßwarenmassendosiereinheit mit einen reversierend drehend angetriebenen Drehkolben zum abwechselnden Befüllen einer Dosierkammer mit Süßwarenmasse und Verdrängen der Süßwarenmasse aus der Dosierkammer.

Erfindungsgemäß wird die einsinnige Drehung des Drehkolbens des oberhalb beschriebenen Stands der Technik EP 0 122 369 A2 um 360° während eines Arbeitstakts durch eine abwechselnde Drehung des Drehkolbens in zwei unterschiedlichen Drehrichtungen ersetzt. Die erste Drehrichtung ist dabei funktional dem Befüllen der Dosierkammer mit Süßwarenmasse zugeordnet. Die entgegengesetzte zweite Drehrichtung ist funktional dem Verdrängen der Süßwarenmasse aus der Dosierkammer zugeordnet. Durch diese zwei unterschiedlichen Drehrichtungen des Drehkolbens ist es möglich, den Drehkolben während eines vollständigen Arbeitstakts mit einem Befüllungstakt und einem Verdrängungstakt um weniger als 360° zu verschwenken. Hierdurch ergibt sich im Vergleich zum Stand der Technik eine verkürzte Taktzeit und somit ein höherer Durchsatz der Süßwarenmassendosiereinheit. Dabei kann die Schwenkbewegung während des Befüllens der Dosierkammer mit Süßwarenmasse und die Schwenkbewegung während des Verdrängens der Süßwarenmasse aus der Dosierkammer jeweils weniger als 180°, insbesondere weniger als 90° und bevorzugt weniger als 45° betragen.

Der Befüllungstakt und der Verdrängungstakt bilden also einen vollständigen Arbeitstakt. Zwischen diesen beiden Takten kann insbesondere kein zeitlicher Puffer vorhanden sein. Während dieser Takte steht der Drehkolben entweder still oder wird in entgegengesetzten Drehrichtungen angetrieben. Die Takte können sich auch zeitlich überlappen.

Die Süßwarenmassendosiereinheit kann einen Grundkörper aufweisen, wobei der Drehkolben relativ zu dem Grundkörper drehend angetrieben ist. Der Grundkörper der Süßwarenmassendosiereinheit könnte auch als Gehäuse oder dergleichen bezeichnet werden. Er dient zur Aufnahme u. a. des Drehkolbens, der Dosierkammer und der Süßwarenmasse. Die Süßwarenmassendosiereinheit weist weiterhin ein Auslassventil mit einem zum abwechselnden Erreichen einer geschlossenen Stellung und einer geöffneten Stellung relativ zu dem Grundkörper und dem Drehkolben drehend angetriebenen Verschlussteil auf. Die Dosierkammer wird durch den Grundkörper, den Drehkolben und das Verschlussteil begrenzt. Die Süßwarenmassendosiereinheit kann weiterhin eine Auslassöffnung zum Auslassen der Süßwarenmasse aus der Dosiereinheit aufweisen. Die Auslassöffnung ist in der geschlossenen Stellung des Verschlussteils von der Dosierkammer getrennt und in der geöffneten Stellung des Verschlussteils mit der Dosierkammer verbunden.

Das maximal mit der Süßwarenmassendosiereinheit dosierbare Portionsvolumen wird durch die Ausbildung und Relativanordnung des Grundkörpers, des Drehkolbens und des Verschlussteils definiert. Ein geringeres Volumen der Dosierkammer ist dann insbesondere durch die Einstellung der beiden Umkehrpunkte des Drehkolbens während seiner reversierenden Drehbewegung einstellbar. Somit kann unterhalb des maximalen Portionsvolumen die Süßwarenmassendosiereinheit flexibel und genau zur Dosierung unterschiedlicher Volumina von Portionen von Süßwarenmassen eingestellt werden.

Über eine Massevorlage wird der Dosierkammer kontinuierlich Süßwarenmasse zur Verfügung gestellt, so dass die Dosierkammer nach dem Verdrängen der Süßwarenmasse wieder mit Süßwarenmasse befüllt ist. Die Massevorlage ist dabei insbesondere druckmäßig gegenüber der Umgebung abgeschlossen und mit Überdruck beaufschlagt. Der Überdruck kann dabei insbesondere mehr als etwa 1 bar und bevorzugt etwa 3 bar oder mehr betragen. In dieser Weise versorgt die Massevorlage die Dosierkammer verlässlich und schnell mit Süßwarenmasse. Hierdurch ergibt sich der besondere Vorteil, dass das Reservoir an Süßwarenmasse getrennt von der Süßwarenmassendosiereinheit gehandhabt werden kann. So ist es insbesondere möglich, die Süßwarenmassendosiereinheit für eine definierte Abgabe von Süßwarenmasse mit einem Förderband mitzubewegen und das Reservoir an Süßwarenmasse ortsfest aufzubewahren.

Es ist aber auch möglich, die Massevorlage mit der Atmosphäre zu verbinden und die Süßwarenmasse z. B. über einen Trichter zuzuführen. In diesem Fall erfolgt die Zuführung dann also unter dem Einfluss der Schwerkraft. Dies bietet sich insbesondere bei nicht pumpfähigen und nicht druckstabilen Massen an.

Der Drehkolben und das Verschlussteil können so ausgebildet und angeordnet sein, dass in der geöffneten Stellung des Verschlussteils und auch zu Beginn der Drehung des Verschlussteils von der geschlossenen Stellung in die geöffnete Stellung die Dosierkammer und die Auslassöffnung von der Massevorlage getrennt sind. Insbesondere bei einer Druckbeaufschlagung der Süßwarenmasse würde ansonsten das Problem bestehen, dass Süßwarenmasse bereits durch die Auslassöffnung austritt, bevor der Drehkolben seine Verdrängungsbewegung ausführt. Dies könnte dann z. B. dazu führen, dass Süßwarenmasse an einer falschen Stelle oder zuviel Süßwarenmasse an der richtigen Stelle abgegeben wird.

Das Verschlussteil kann ein Dichtorgan zum Trennen der Dosierkammer und der Auslassöffnung von der Massevorlage besitzen. Das Dichtorgan kann durch eine im Querschnitt kreisbogenabschnittsförmige Oberfläche des Verschlussteils gebildet sein. Der Kreisbogenabschnitt ist dabei so gewählt, dass die Dichtfunktion während der gesamten Öffnungsbewegung des Verschlussteils des Auslassventils erhalten bleibt. Dies wird insbesondere dadurch erreicht, dass sich der Kreisbogenabschnitt über einen größeren Winkelbereich erstreckt als die Winkeldifferenz im Rahmen der Öffnungsbewegung des Verschlussteils zwischen der gerade geöffneten Stellung und dem Ende dieser Öffnungsbewegung.

Das Auslassventil kann insbesondere so ausgebildet sein, dass der Auslasskanal teilweise randoffen ausgebildet ist. Im Gegensatz zu einem vollständig randgeschlossenen Auslasskanal besteht somit eine verringerte Gefahr eines Festsetzens der Süßwarenmasse in dem Auslasskanal.

Der Grundkörper kann ein einen Dichtbereich definierendes Dichtorgan zum Begrenzen der Dosierkammer und zum Abdichten der Dosierkammer gegenüber der Massevorlage aufweisen. Der Drehkolben kann ein korrespondierendes Dichtorgan zum Abdichten der Dosierkammer gegenüber der Massevorlage aufweisen. Der Drehkolben kann während des normalen Betriebs der Süßwarenmassendosiereinheit nur innerhalb des Dichtbereichs des Grundkörpers bewegt werden, d. h. er verlässt diesen nicht. Unter dem normalen Betrieb werden dabei die Arbeitstakte verstanden. Aufgrund der Drehbewegung des Drehkolbens versteht es sich, dass der Dichtbereich kreisbogenabschnittsförmig ausgebildet ist. Im Anschluss daran kann der Grundkörper entweder enden oder sich in einer anderen Form weitererstrecken. Wenn der Drehkolben an dieser Stelle vorbeigeführt würde - wie dies im Stand der Technik EP 0 122 369 A2 der Fall ist - würde es zu einer Scherung der Süßwarenmasse kommen, wodurch die Süßwarenmasse beschädigt werden könnte. Durch die Vermeidung von Scherkanten und/oder Unterdruck können so auch belüftete oder mit Cerealien versetzte Massen beschädigungsfrei bzw. beschädigungsarm dosiert werden.

Außerhalb des normalen Betriebs kann insbesondere eine Reinigungsposition des Drehkolbens und des Auslassventils existieren, die eine Reinigungsfahrt ermöglich. Die Reinigungsfahrt dient dazu, einen Aufbau der Süßwarenmasse in der Vorrichtung zu vermeiden. Eine Reinigungsfahrt kann beispielsweise bei einem Stopp der Vorrichtung tagsüber, z. B. für einen Massewechsel, oder nachts erfolgen.

Der Drehkolben kann während des Verdrängungstakts mit mindestens zwei unterschiedlich großen Drehgeschwindigkeiten in der zweiten Drehrichtung drehend angetrieben werden. Je größer die Drehgeschwindigkeit des Drehkolbens ist, desto größer ist der abgegebene Volumenstrom der Süßwarenmassendosiereinheit. Durch unterschiedlich große Drehgeschwindigkeiten können also unterschiedlich große Volumenströme zu unterschiedlichen Zeitpunkten während eines Verdrängungstakts erzeugt werden. Wenn dann eine oder mehrere Relativbewegungen der Süßwarenmassendosiereinheit zu einem Fördermittel erfolgen, können verschiedene geometrische Formen erzeugt werden. So ist es z. B. möglich, eine rautenförmige Ausnehmung eines Süßwarenstücks zu füllen.

Der Drehkolben kann so angetrieben sein, dass er am Ende des Verdrängungstakts eine kurze Rückbewegung in entgegengesetzter Richtung ausführt. Hierdurch kann ein definierter Fadenriss der Süßwarenmasse erreicht werden. Ein solcher definierter Fadenriss ist insbesondere bei klebrigen Massen sinnvoll bzw. erforderlich.

Der Drehkolben kann mittels eines Servomotors angetrieben sein. Mit einem derartigen Servomotor lässt sich die erforderliche reversierende Drehbewegung exakt erzeugen. Dabei können die Umkehrpunkte der Drehbewegung, die Stillstandszeiten, die Drehwinkel und die Drehgeschwindigkeiten exakt eingestellt werden.

Ein derartiger Servomotor kann auch für den getrennten Antrieb des Verschlussteils des Auslassventils benutzt werden. Es sind dann also zwei Antriebe mit jeweils einem Servomotor vorhanden.

Die Erfindung betrifft weiterhin eine Vorrichtung zum Dosieren einer Süßwarenmasse mit einer Mehrzahl von nebeneinander angeordneten Süßwarenmassendosiereinheiten. Die Süßwarenmassendosiereinheiten können die oberhalb beschriebenen Merkmale aufweisen. Mittels einer solchen Vorrichtung ist das gleichzeitige Dosieren einer Mehrzahl von Süßwarenmassenportionen in einem automatisierten Herstellungsverfahren möglich. Durch die Anordnung der Süßwarenmassendosiereinheiten nebeneinander und nicht hintereinander - wie dies im Stand der Technik EP 0 122 369 A2 der Fall ist - ergibt sich der Vorteil, dass sich Fertigungstoleranzen und insbesondere Längenänderungen nicht aufsummieren. Die Süßwarenmassendosiervorrichtung kann insbesondere 4, 5, 10, 12, 15, 17, 18, 20, 25, 30, 35 oder mehr nebeneinander angeordnete Süßwarenmassendosiereinheiten aufweisen.

Die erfindungsgemäße Süßwarenmassendosiereinheit und Vorrichtung dienen zum Dosieren, z. B. dem Dressieren, einer Fett und/oder Zucker und/oder Zuckerersatzstoffe enthaltenden Süßwarenmasse. Bei der Süßwarenmasse kann es sich z. B. um Karamell, Fondant, Schokolademasse, Fettglasur, Gelee, Fruchtmasse, Nougat, Keksfüllungen, Marmelade, belüftete Massen, Sahne, Marshmallows oder Eiweißschaum handeln.

Mit der neuen Vorrichtung können sehr hohe Taktzahlen erzielt werden. So sind Taktzahlen von mehr als 50 Takten pro Minute und insbesondere von etwa 75 Takten oder mehr pro Minute möglich.

In der Vorrichtung mit einer Mehrzahl von Süßwarendosiereinheiten werden die Drehkolben der Süßwarenmassendosiereinheiten vorzugsweise über einen gemeinsamen ersten Antrieb mit einem ersten Servomotor angetrieben. Die Verschlussteile der Auslassventile der Süßwarenmassendosiereinheiten werden dann ebenfalls über einen gemeinsamen zweiten Antrieb mit einem zweiten Servomotor angetrieben. Es können aber auch andere Antriebe und Motoren verwendet werden, die die gewünschte Einstellung der Drehbewegungen ermöglichen.

Die Vorrichtung wird insbesondere so betrieben, dass die Süßwarenmasse die Vorrichtung kontinuierlich durchströmt. Hierdurch wird sichergestellt, dass die Massevorlage und somit auch die Dosierkammern stets mit Süßwarenmasse versorgt werden. Die Dosierung der Süßwarenmasse kann somit exakt volumetrisch erfolgen.

Die Vorrichtung kann mindestens eine flexible Schlauchleitung aufweisen, durch die Süßwarenmasse den Süßwarenmassendosiereinheiten bzw. der Massevorlage oder den Massevorlagen zugeführt wird. Somit kann das Reservoir an Süßwarenmasse, welches der Versorgung der Massevorlage dient, außerhalb der Vorrichtung angeordnet sein. Hierdurch ergibt sich der Vorteil, dass die Vorrichtung vergleichsweise klein und leicht ausgebildet und somit schnell bewegt werden kann. Das Reservoir hingegen kann ortsfest angeordnet sein, so dass eine Relativbewegung zwischen der sich bewegenden Vorrichtung und dem stillstehenden Reservoir stattfindet. Diese Relativbewegung wird durch die flexible Schlauchleitung bzw. die flexiblen Schlauchleitungen ausgeglichen.

Die Vorrichtung kann mehrere derartige flexible Schlauchleitungen für die Zuführung der Süßwarenmasse aufweisen. So können beispielsweise zwei derartige Schlauchleitungen für die Zuführung und eine Schlauchleitung für die Abführung der überschüssigen Süßwarenmasse vorhanden sein. Die erste Schlauchleitung für die Zuführung kann dabei etwa im Bereich der ersten Süßwarenmassendosiereinheit in der Reihe von Süßwarenmassendosiereinheiten und die zweite etwa im Bereich der letzten Süßwarenmassendosiereinheit in der Reihe von Süßwarenmassendosiereinheiten angeordnet sein. Die Abführleitung ist vorzugsweise etwa im mittleren Bereich der Reihe angeordnet. In dieser Weise wird die ständige Versorgung der Massevorlage mit Süßwarenmasse und gleichzeitig sichergestellt, dass die Vorrichtung flexibel, einfach und schnell relativ zur Umgebung bewegt werden kann.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Drehkolben die Rede ist, ist dies so zu verstehen, dass genau ein Drehkolben, zwei Drehkolben oder mehr Drehkolben vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Schnittansicht einer ersten beispielhaften Ausführungsform einer neuen Süßwarenmassendosiereinheit in einer ersten Stellung zu Beginn eines Befüllungstakts.
- **Fig. 2**: zeigt die Süßwarenmassendosiereinheit in einer nachfolgenden zweiten Stellung.
- **Fig. 3**: zeigt die Süßwarenmassendosiereinheit in einer nachfolgenden dritten Stellung.
- **Fig. 4**: zeigt die Süßwarenmassendosiereinheit in einer nachfolgenden vierten Stellung.
- **Fig. 5**: zeigt die Süßwarenmassendosiereinheit in einer nachfolgenden fünften Stellung.
- **Fig. 6**: zeigt die Süßwarenmassendosiereinheit in einer nachfolgenden sechsten Stellung zu Beginn eines Verdrängungstakts.
- **Fig. 7**: zeigt die Süßwarenmassendosiereinheit in einer nachfolgenden siebten Stellung.
- **Fig. 8**: zeigt die Süßwarenmassendosiereinheit in einer nachfolgenden optionalen achten Stellung.
- **Fig. 9**: zeigt eine perspektivische Ansicht einer ersten beispielhaften Ausführungsform einer neuen Vorrichtung mit einer Mehrzahl von Süßwarenmassendosiereinheiten.
- **Fig. 10**: zeigt eine Vorderansicht der Vorrichtung gemäß Fig. 9.
- **Fig. 11**: zeigt eine ausschnittsweise Detailansicht eines Teils der Vorrichtung gemäß Fig. 10.

### FIGURENBESCHREIBUNG

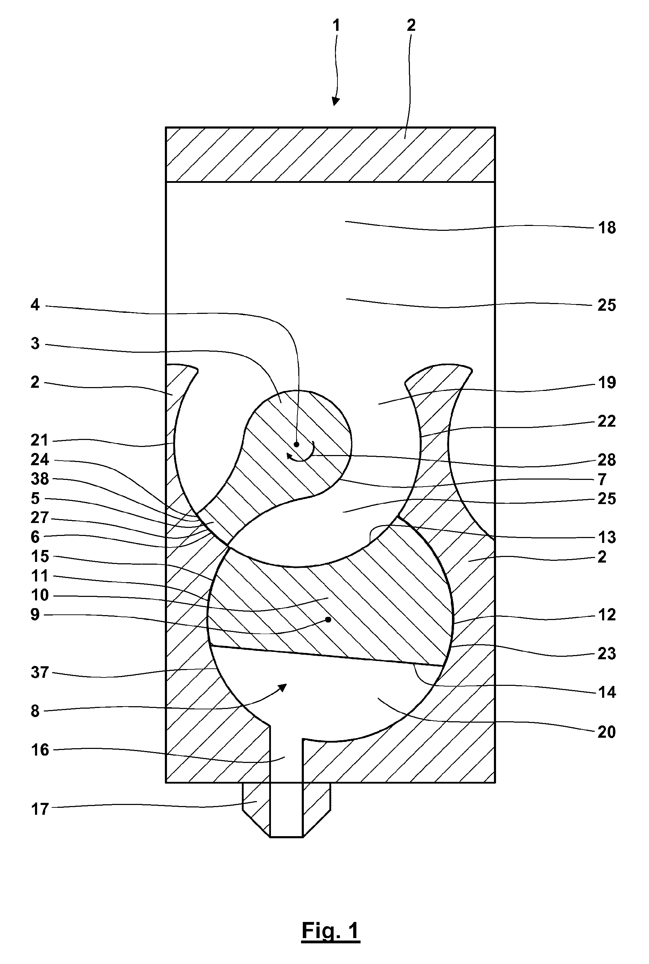

Die **Fig. 1 bis 8** zeigen verschiedene Betriebsstellungen einer ersten beispielhaften Ausführungsform einer neuen Süßwarenmassendosiereinheit 1.

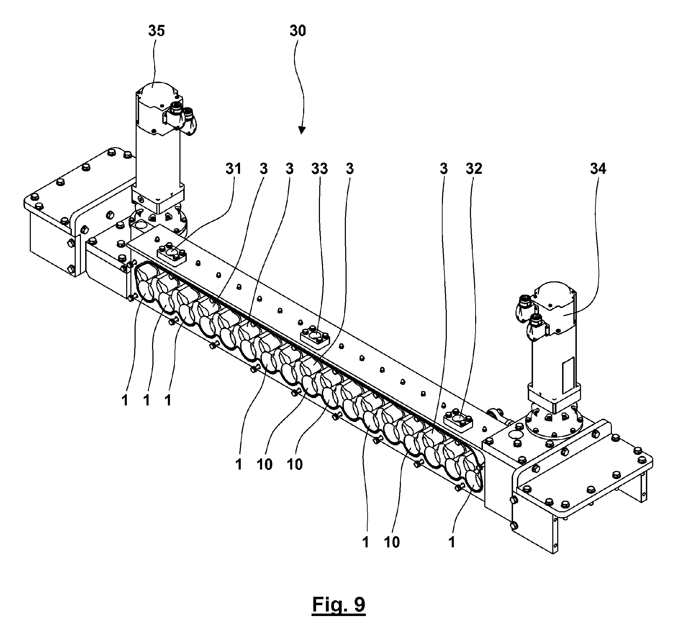

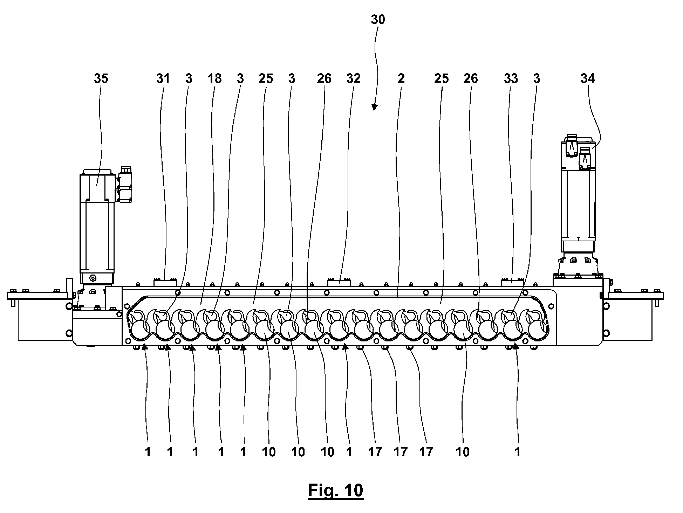

Die Süßwarenmassendosiereinheit 1 weist einen Grundkörper 2 auf, der auch als Gehäuse bezeichnet werden könnte. Der Grundkörper 2 ist in den Ansichten der Fig. 1 bis 8 nur teilweise dargestellt. Bei der obersten Linie, der ganz linken Linie und der ganz rechten Linie handelt es sich um Abbruchlinien. Die vollständige Ausbildung des Grundkörpers ist in den Fig. 9 und 10 erkennbar.

In dem Grundkörper 2 ist ein Drehkolben 3 relativ zu dem Grundkörper 2 um eine Drehachse 4 drehend angetrieben. Der Drehkolben 3 weist an seinem einen Ende 5 eine im Querschnitt kreisbogenabschnittsförmige Oberfläche 38 und ein durch diese Oberfläche 38 gebildetes Dichtorgan 6 auf. In dem hier dargestellten Beispiel handelt es sich bei dem Dichtorgan 6 um die Oberfläche des Drehkolbens 5. Es könnte sich aber auch um ein anderes Dichtorgan, z. B. ein separates gummielastisches Dichtelement handeln, welches mit dem Drehkolben 3 verbunden ist. Der Drehkolben 3 weist in einem anderen Bereich ein weiteres Dichtorgan 7 auf.

Die Süßwarenmassendosiereinheit 1 weist weiterhin ein Auslassventil 8 mit einem um eine Drehachse 9 drehbar angetriebenen Verschlussteil 10 auf. Das Verschlussteil 10 weist mehrere im Querschnitt kreisbogenabschnittsförmige Oberflächen 11, 12 und 13 sowie eine ebene Oberfläche 14 auf. Die Oberfläche 11 bildet dabei ein Dichtorgan 15.

Im unteren Bereich des Grundkörpers 2 ist weiterhin eine Auslassöffnung 16 vorgesehen. An die Auslassöffnung 16 schließt hier eine Auslassdüse 17 an.

Der Grundkörper 2 weist in seinem oberen Bereich einen Freiraum 18 und darunter zwei teilweise im Querschnitt kreisförmige Freiräume 19 und 20 auf.

Der Freiraum 19 wird dabei durch eine im Querschnitt kreisbogenabschnittsförmige Oberfläche 21 und eine auf der anderen Seite des Drehkolbens 3 liegende im Querschnitt kreisbogenabschnittsförmige Oberfläche 22 gebildet. Die Oberfläche 21 bildet dabei ein Dichtorgan 24. Das Dichtorgan 24 definiert einen Dichtbereich 27.

Der Freiraum 20 wiederum wird durch eine im Querschnitt kreisbogenabschnittsförmige Oberfläche 37 und eine gegenüberliegende im Querschnitt kreisbogenabschnittsförmige Oberfläche 23 gebildet.

Während des normalen Betriebs der Süßwarenmassendosiereinheit 1 sind sämtliche Freiräume 18, 19, 20 sowie die Auslassöffnung 16 und die Auslassdüse 17 vollständig mit Süßwarenmasse gefüllt. Die Süßwarenmasse ist in den Zeichnungen nicht dargestellt. Man kann die Zeichnungen aber auch so verstehen, dass sämtliche nicht schraffierten Bereiche im Inneren des Grundkörpers 2 Süßwarenmasse enthalten.

Bei dem Teil der Süßwarenmasse, der z. B. in der Darstellung der Fig. 1 die Freiräume 18 und 19 füllt, handelt es sich um die so genannte Massevorlage 25.

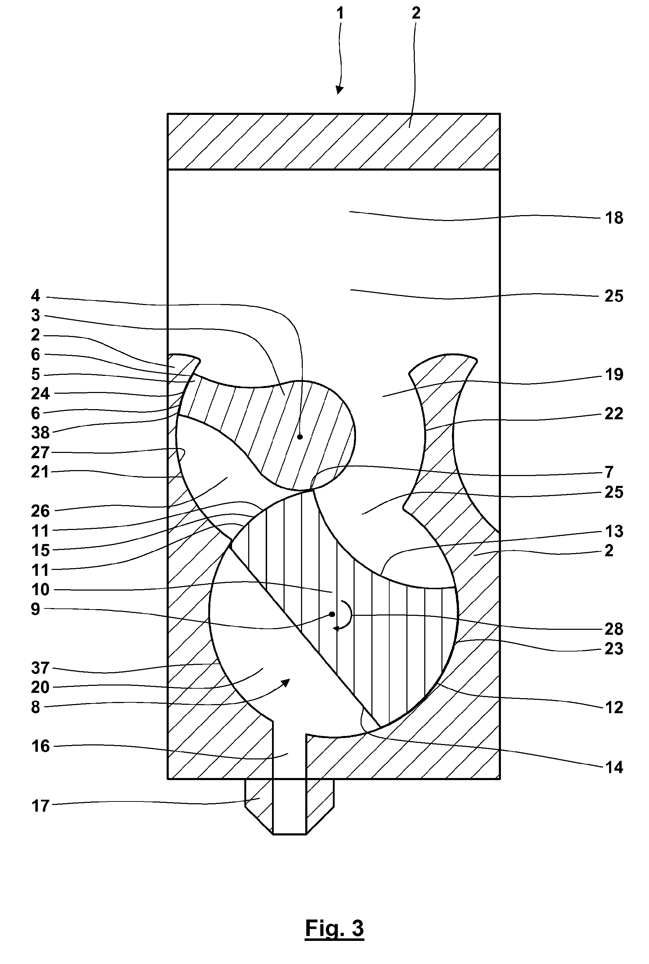

Der Teil des Freiraums 19, der zum Bestimmen des Portionsvolumen der Süßwarenmasse dient, wird als Dosierkammer 26 bezeichnet (siehe z. B. Fig. 3). Die Massevorlage 25 und die Dosierkammer 26 besitzen keine permanent feststehende Geometrie, sondern verändern sich bzw. ergeben sich erst aufgrund der unterschiedlichen Stellungen des Drehkolbens 3 und des Verschlussteils 10 während des Betriebs der Süßwarenmassendosiereinheit 1.

Im Folgenden wird nun anhand der Fig. 1 bis 8 die Funktionsweise der Süßwarenmassendosiereinheit 1 genauer beschrieben:
In **Fig. 1** ist die Süßwarenmassendosiereinheit 1 in einer ersten Stellung zu Beginn eines Befüllungstakts der Süßwarenmassendosiereinheit 1 gezeigt. Der Drehkolben 3 befindet sich in seiner relativ zu dem Dichtbereich 27 des Grundkörpers 2 untersten Stellung. Die Dichtwirkung kann dabei durch eine exakte Herstellung der korrespondierenden Oberflächen 24 und 38 und ein entsprechendes geringes Spaltmaß erzeugt werden. Sie kann aber auch in anderer Weise realisiert sein.

Das Verschlussteil 10 und somit das Auslassventil 8 befindet sich in seiner geschlossenen Stellung.

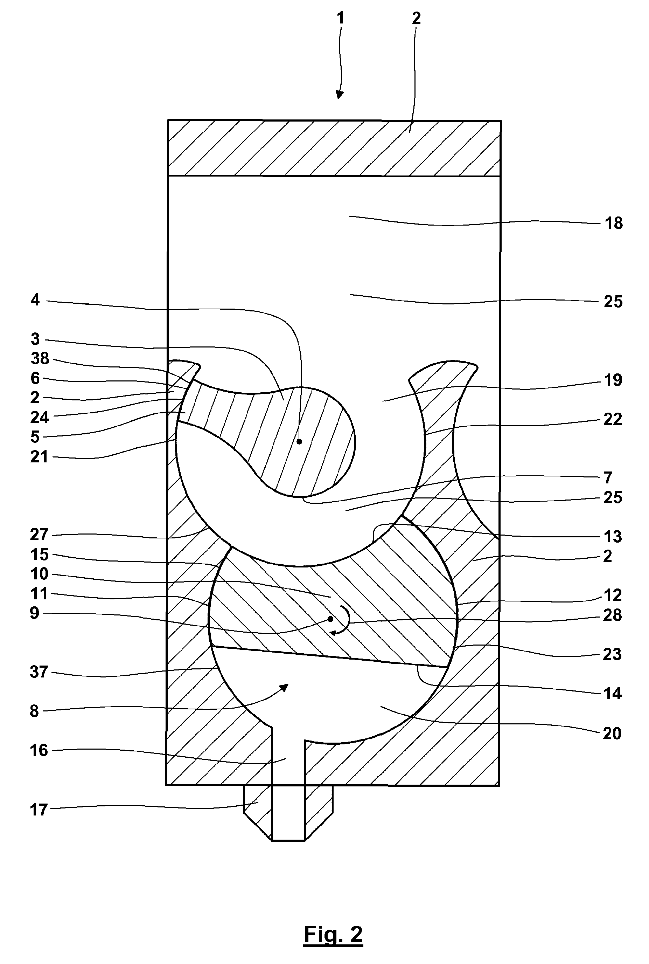

Der Drehkolben 3 wird nun von der in Fig. 1 dargestellten ersten Stellung in die in Fig. 2 dargestellte zweite Stellung verdreht. Der Drehkolben 3 wird dabei um die Drehachse 4 in einer ersten Drehrichtung 28 drehend angetrieben. Diese Drehrichtung 28 entspricht hier dem Uhrzeigersinn. Der Drehkolben 3 erreicht dann die in **Fig. 2** dargestellte Stellung und verbleibt zunächst in dieser. Er steht also still. Der später die Dosierkammer 26 bildende Teil des Freiraums 19 ist mit Süßwarenmasse gefüllt.

Als nächstes erfolgt eine Betätigung des Verschlussteils 10, wie diese fortgesetzt in den Fig. 3, 4, 5 und 6 gezeigt ist. Das Verschlussteil 10 wird nun ebenfalls in der ersten Drehrichtung 28 drehend angetrieben. Das Auslassventil 8 könnte aber auch so konstruiert sein, dass diese Drehrichtung nicht der ersten Drehrichtung 28 des Drehkolbens 3 entspricht. Es wäre auch möglich, diese Drehbewegung ganz oder teilweise gleichzeitig mit der oberhalb beschriebenen Drehbewegung des Drehkolbens 3 auszuführen.

**In** **Fig. 3** ist eine dritte Stellung der Süßwarenmassendosiereinheit 1 dargestellt, in der sowohl die Auslassöffnung 16 verschlossen als auch die Dichtwirkung zwischen dem Verschlussteil 10 und dem Drehkolben 3 hergestellt ist. Der Drehkolben 3 dichtet auch gegenüber dem Grundkörper 2 ab. Insgesamt wird somit durch diese Bauteile eine geschlossene Kammer mit einem definierten Volumen gebildet, bei der es sich um die Dosierkammer 26 handelt.

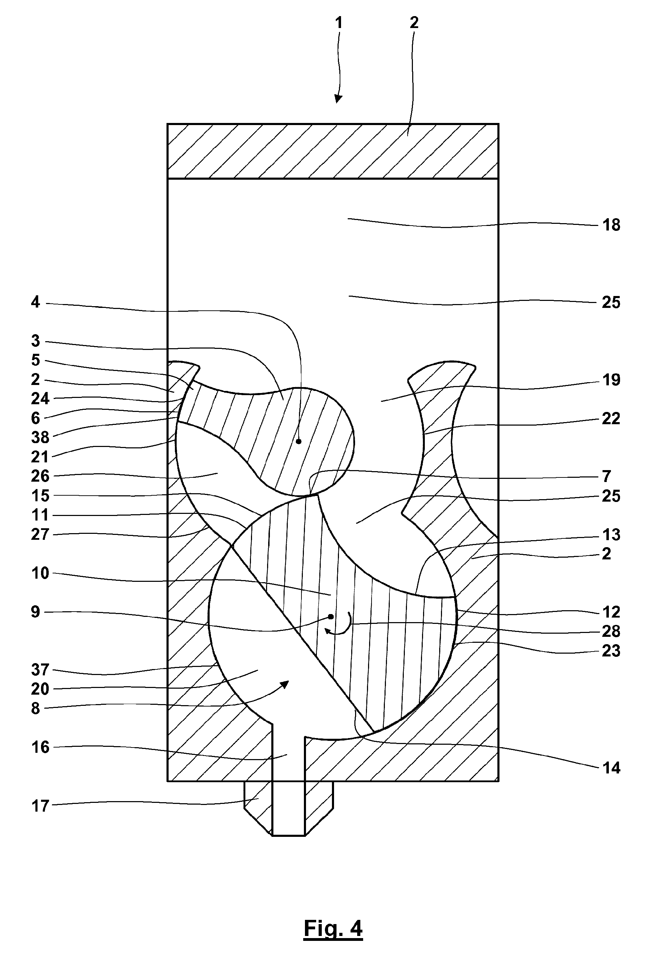

In **Fig. 4** ist die vierte Stellung der Süßwarenmassendosiereinheit 1 gezeigt, in der eine Verbindung zwischen der Dosierkammer 26 und der Auslassöffnung 16 noch nicht besteht, aber direkt danach beginnt.

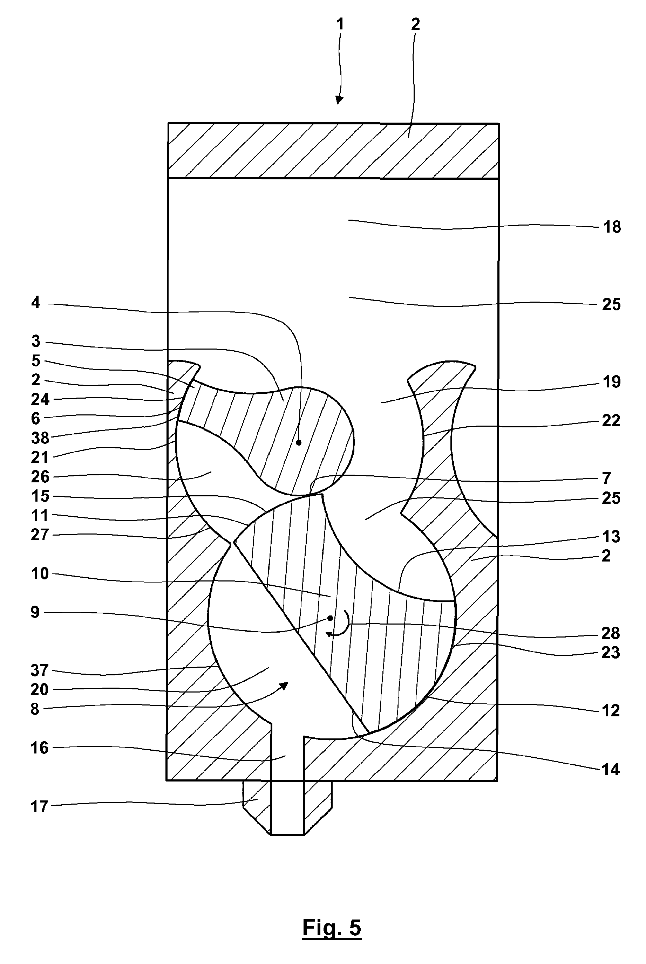

In der wenig später eintretenden in **Fig. 5** dargestellten fünften Stellung ist diese Verbindung nun erkennbar. Es ist weiterhin erkennbar, dass auch in dieser Stellung die Dosierkammer 26 und die Auslassöffnung 16 von der Massevorlage 25 getrennt sind. Hierdurch wird verhindert, dass vor dem eigentlichen Dosiertakt bereits Süßwarenmasse aus der Süßwarenmassendosiereinheit 1 austritt.

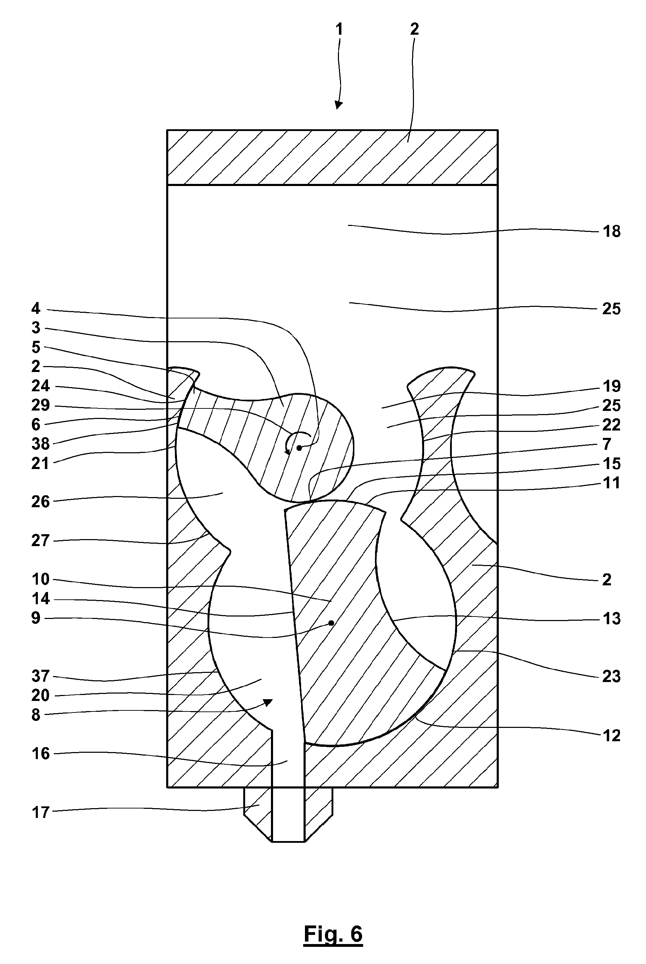

In der in **Fig. 6** dargestellten sechsten Stellung der Süßwarenmassendosiereinheit 1 ist die vollständig geöffnete Stellung des Verschlussteils 10 gezeigt. In dieser Stellung endet die Drehbewegung des Verschlussteils 10 in der ersten Drehrichtung 28. Sowohl der Drehkolben 3 als auch das Verschlussteil 10 stehen also in dieser Stellung still. Nun beginnt der eigentliche Verdrängungstakt. Dabei wird der Drehkolben 3 in der zweiten Drehrichtung 29 drehend angetrieben. Im Rahmen dieser Drehbewegung in der zweiten Drehrichtung 29 verdrängt der Drehkolben 3 die Süßwarenmasse aus der Dosierkammer 26, wobei diese die nach unten in Richtung der Auslassöffnung 16 anschließende Süßwarenmasse ebenfalls weiter schiebt, so dass ein Volumen an Süßwarenmasse aus der Auslassöffnung 16 austritt, welches dem Volumen der Dosierkammer 26 entspricht. Dies bedeutet also, dass eine volumenmäßige Übereinstimmung zwischen der Dosierkammer 26 und der aus der Süßwarenmassendosiereinheit 1 austretenden Süßwarenmasse, nicht jedoch eine Identität der Partikel der Süßwarenmasse besteht.

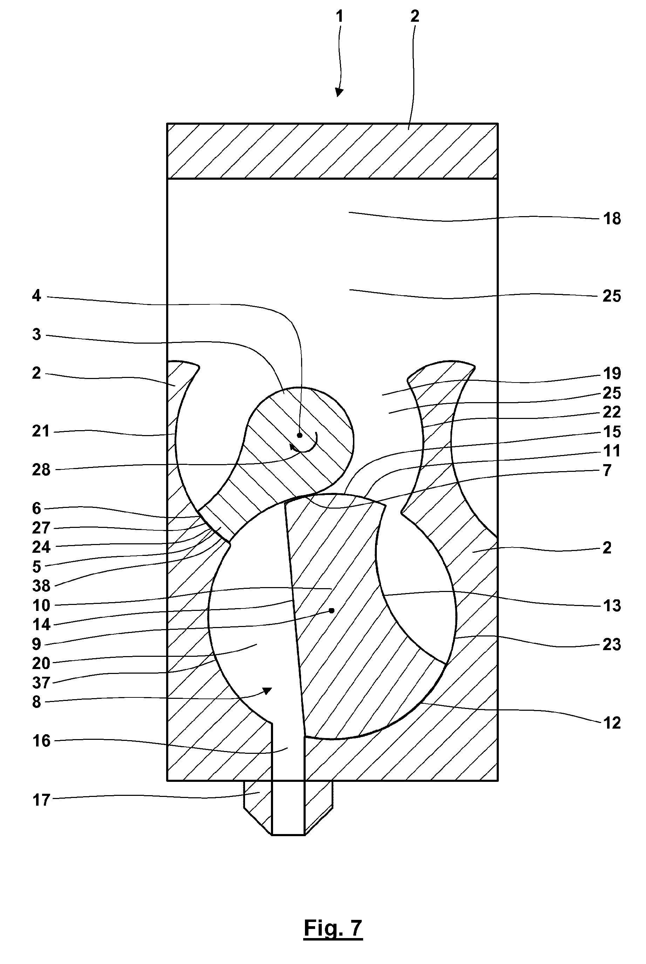

Das Ende der Verdrängungsbewegung ist in der in **Fig. 7** dargestellten siebten Stellung der Süßwarenmassendosiereinheit 1 dargestellt.

Gemäß einer ersten Ausführungsform des Verfahrens wird anschließend das Verschlussteil 10 in der zweiten Drehrichtung 29 verdreht, so dass wieder die in Fig. 1 dargestellte erste Stellung eingenommen wird. Hier endet dann ein Arbeitstakt, an den sich der nächste Arbeitstakt anschließt.

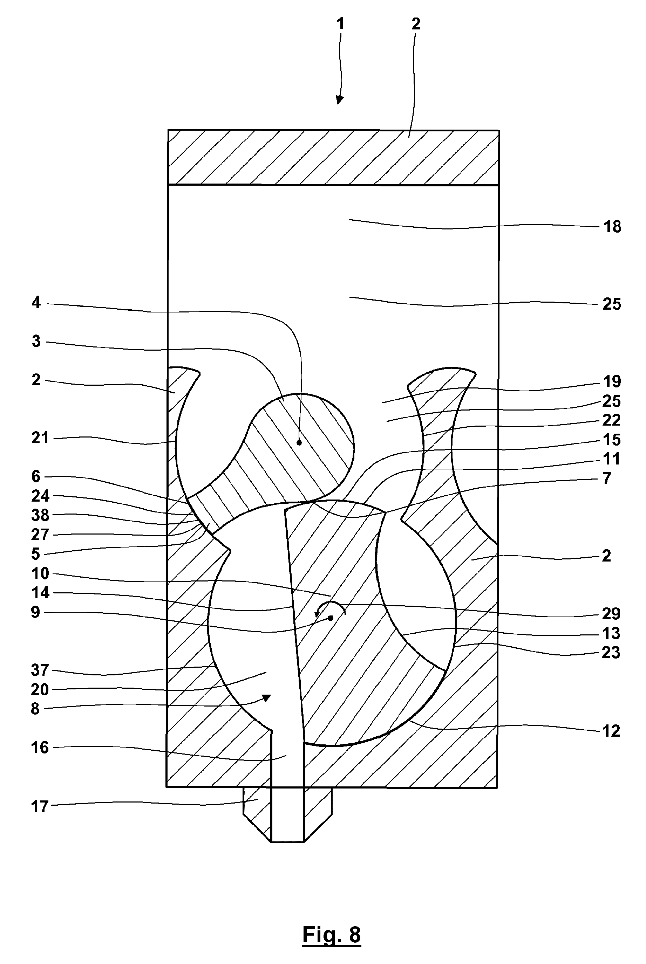

Gemäß einer zweiten Ausführungsform des Verfahrens kann der Drehkolben 3 einige wenige Winkelgrad (z. B. etwa 2 bis 20 Winkelgrad, insbesondere etwa 5 bis 15 Winkelgrad insbesondere etwa 9 bis 12 Winkelgrad) in der ersten Drehrichtung 28 zurückbewegt werden, wie dies in der in Fig. 8 dargestellten achten Stellung geschehen ist. Hierdurch bewirkt der Drehkolben 3 einen definierten Fadenabriss an der Süßwarenmasse, so dass die Süßwarenmasse sauber dosiert wird. Als nächstes wird dann das Verschlussteil 10 in der zweiten Drehrichtung 29 verdreht, bis es die in Fig. 1 dargestellte Stellung erreicht hat. Der Drehkolben 3 befindet sich allerdings in einer etwas anderen Drehstellung als in Fig. 1 dargestellt, nämlich der Drehstellung gemäß Fig. 8. In dieser Stellung ist dann der Arbeitstakt beendet. Der nächste Arbeitstakt beginnt, und es wird die in Fig. 2 dargestellte zweite Stellung eingenommen.

Die **Fig. 9 bis 11** zeigen verschiedene Ansichten einer beispielhaften Ausführungsform einer Vorrichtung 30 mit einer Mehrzahl von Süßwarenmassendosiereinheiten 1. Der Aufbau und die Funktion der Süßwarenmassendosiereinheiten 1 ist so wie oberhalb beschrieben, so dass auf die oberhalb angegebenen Ausführungen Bezug genommen wird.

Die Süßwarenmassendosiervorrichtung 30 weist in diesem Fall 17 nebeneinander angeordnete Süßwarenmassendosiereinheiten 1 auf. Es könnten aber auch weniger oder mehr Süßwarenmassendosiereinheiten 1 vorhanden sein. Die Süßwarenmassendosiereinheiten 1 sind so nebeneinander angeordnet, dass die Drehachsen 4 ihrer Drehkolben 3 parallel und beabstandet zueinander verlaufen. Zur Verbesserung der Übersichtlichkeit sind in den Fig. 9 bis 11 nicht alle Süßwarenmassendosiereinheiten 1 mit dem Bezugszeichen 1 und auch nicht alle ihre Bestandteile mit Bezugzeichen versehen.

Die Vorrichtung 30 weist einen ersten Eingangsanschluss 31, einen zweiten Eingangsanschluss 32 und einen Ausgangsanschluss 33 auf. An jedem der Anschlüsse 31, 32, 33 ist jeweils eine flexible Schlauchleitung (nicht dargestellt) angeschlossen. Über die an den Eingangsanschlüssen 31 und 32 angeschlossenen Schlauchleitungen wird Süßwarenmasse der Vorrichtung 30 zugeführt. Über die im mittleren Bereich der Vorrichtung 30 angeordnete und an den Ausgangsanschluss 33 angeschlossenen flexible Schlauchleitung wird überschüssige Süßwarenmasse aus der Vorrichtung 30 abgeführt. Diese kann anschließend - ggf. nach einer Zwischenbehandlung - wieder der Vorrichtung 30 zugeführt werden.

Die Vorrichtung 30 weist einen ersten Servomotor 34 und einen zweiten Servomotor 35 auf. Der erste Servomotor 34 ist Teil eines nicht näher dargestellten ersten Antriebs mit einer gemeinsamen ersten Antriebswelle, die mit den Drehkolben 3 verbunden ist, so dass diese in der gewünschten Weise gemeinsam angetrieben werden.

Der zweite Servomotor 35 ist Teil eines nicht näher dargestellten zweiten Antriebs mit einer gemeinsamen zweiten Antriebswelle, die mit den Verschlussteilen 10 der Auslassventile 8 verbunden ist, so dass diese in der gewünschten Weise gemeinsam angetrieben werden.

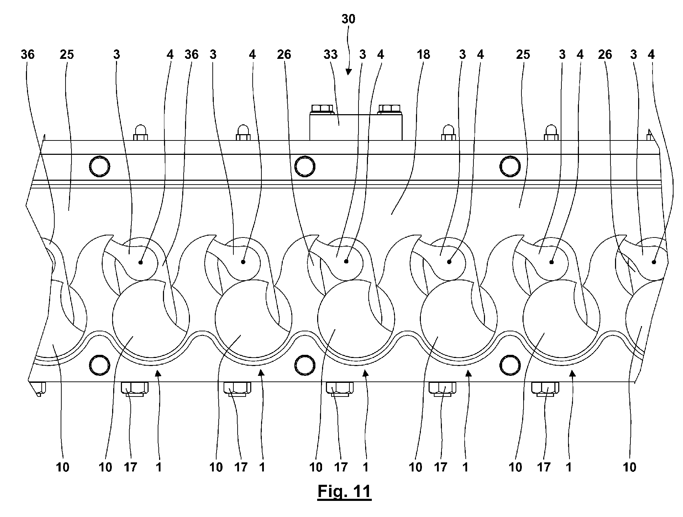

Wie insbesondere in den Fig. 10 und 11 gut erkennbar ist, weisen die Süßwarenmassendosiereinheiten 1 einen gemeinsamen Grundkörper 2 bzw. ein gemeinsames Gehäuse auf. Es wird somit auch eine gemeinsame Massevorlage 25 gebildet.

In Fig. 11 ist weiterhin erkennbar, dass der Drehkolben 3 und das Verschlussteil 10 an einem Lagerklotz 36 gelagert sind. Hierdurch wird der Austausch bzw. die Reparatur des Drehkolbens 3 und des Verschlussteils 10 vereinfacht.

### BEZUGSZEICHENLISTE

- 1: Süßwarenmassendosiereinheit
- 2: Grundkörper
- 3: Drehkolben
- 4: Drehachse
- 5: Ende
- 6: Dichtorgan
- 7: Dichtorgan
- 8: Auslassventil
- 9: Drehachse
- 10: Verschlussteil
- 11: Oberfläche
- 12: Oberfläche
- 13: Oberfläche
- 14: Oberfläche
- 15: Dichtorgan
- 16: Auslassöffnung
- 17: Auslassdüse
- 18: Freiraum
- 19: Freiraum
- 20: Freiraum
- 21: Oberfläche
- 22: Oberfläche
- 23: Oberfläche
- 24: Dichtorgan
- 25: Massevorlage
- 26: Dosierkammer
- 27: Dichtbereich
- 28: Erste Drehrichtung
- 29: Zweite Drehrichtung
- 30: Vorrichtung
- 31: Erster Eingangsanschluss
- 32: Zweiter Eingangsanschluss
- 33: Ausgangsanschluss
- 34: Erster Servomotor
- 35: Zweiter Servomotor
- 36: Lagerklotz
- 37: Oberfläche
- 38: Oberfläche

## Patentansprüche

1. Süßwarenmassendosiereinheit (1), **gekennzeichnet durch** einen reversierend drehend angetriebenen Drehkolben (3) zum abwechselnden Befüllen einer Dosierkammer (26) mit Süßwarenmasse und Verdrängen der Süßwarenmasse aus der Dosierkammer (26).

2. Süßwarenmassendosiereinheit (1) nach Anspruch 1, **dadurch gekennzeichnet, dass**
der Drehkolben (3) einen Befüllungstakt zum Befüllen der Dosierkammer (26) mit Süßwarenmasse aufweist, wobei der Drehkolben (3) während des Befüllungstakts in einer ersten Drehrichtung (28) drehend angetrieben ist, und
der Drehkolben (3) einen Verdrängungstakt zum Verdrängen der Süßwarenmasse aus der Dosierkammer (26) aufweist, wobei der Drehkolben (3) während des Verdrängungstakts in einer entgegengesetzten zweiten Drehrichtung (29) drehend angetrieben ist.

3. Süßwarenmassendosiereinheit (1) nach Anspruch 2, **gekennzeichnet durch**
einen Grundkörper (2), wobei der Drehkolben (3) relativ zu dem Grundkörper (2) drehend angetriebenen ist,
ein Auslassventil (8) mit einem zum abwechselnden Erreichen einer geschlossenen Stellung und einer geöffneten Stellung relativ zu dem Grundkörper (2) und dem Drehkolben (3) drehend angetriebenen Verschlussteil (10), wobei die Dosierkammer (26) **durch** den Grundkörper (2), den Drehkolben (3) und das Verschlussteil (10) begrenzt wird, und
eine Auslassöffnung (16) zum Auslassen der Süßwarenmasse aus der Süßwarenmassendosiereinheit (1), wobei die Auslassöffnung (16) in der geschlossenen Stellung des Verschlussteils (10) von der Dosierkammer (26) getrennt und in der geöffneten Stellung des Verschlussteils (10) mit der Dosierkammer (26) verbunden ist.

4. Süßwarenmassendosiereinheit (1) nach mindestens einem der vorhergehenden Ansprüche, **gekennzeichnet durch** eine Massevorlage (25), über die Süßwarenmasse der Dosierkammer (26) bereitgestellt wird.

5. Süßwarenmassendosiereinheit (1) nach Anspruch 4, **dadurch gekennzeichnet, dass** der Drehkolben (3) und das Verschlussteil (10) so ausgebildet und angeordnet sind, dass in der geöffneten Stellung des Verschlussteils (10) und auch zu Beginn der Drehung des Verschlussteils (10) von der geschlossenen Stellung in die geöffnete Stellung die Dosierkammer (26) und die Auslassöffnung (16) von der Massevorlage (25) getrennt sind.

6. Süßwarenmassendosiereinheit (1) nach Anspruch 4 oder 5, **dadurch gekennzeichnet, dass** ein Teil der Massevorlage (25) durch den Grundkörper (2), den Drehkolben (3) und das Verschlussteil (10) begrenzt wird und dieser Teil der Massevorlage (25) im Vergleich zu der Dosierkammer (26) auf der anderen Seite des Drehkolbens (3) angeordnet ist.

7. Süßwarenmassendosiereinheit (1) nach mindestens einem der Ansprüche 4 bis 6, **dadurch gekennzeichnet, dass** das Verschlussteil (10) ein Dichtorgan (15) zum Trennen der Dosierkammer (26) und der Auslassöffnung (16) von der Massevorlage (25) besitzt, wobei das Dichtorgan (15) durch eine im Querschnitt kreisbogenabschnittsförmige Oberfläche (11) des Verschlussteils (10) gebildet wird.

8. Süßwarenmassendosiereinheit (1) nach mindestens einem der Ansprüche 4 bis 7, **dadurch gekennzeichnet, dass**
der Grundkörper (2) ein einen Dichtbereich (27) definierendes Dichtorgan (24) zum Begrenzen der Dosierkammer (26) und zum Abdichten der Dosierkammer (26) gegenüber der Massevorlage (25) aufweist, und
der Drehkolben (3) ein korrespondierendes Dichtorgan (6) zum Abdichten der Dosierkammer (26) gegenüber der Massevorlage (25) aufweist, wobei der Drehkolben (3) während des normalen Betriebs der Süßwarenmassendosiereinheit (1) nur innerhalb des Dichtbereichs (27) des Grundkörpers (2) bewegt wird.

9. Süßwarenmassendosiereinheit (1) nach mindestens einem der Ansprüche 2 bis 8, **dadurch gekennzeichnet, dass** der Drehkolben (3) während des Verdrängungstakts mit mindestens zwei unterschiedlich großen Drehgeschwindigkeiten in der zweiten Drehrichtung (29) drehend angetrieben ist.

10. Süßwarenmassendosiereinheit (1) nach mindestens einem der vorhergehenden Ansprüche, **dadurch gekennzeichnet, dass** der Drehkolben (3) mittels eines Servomotors (34) angetrieben ist.

11. Süßwarenmassendosiereinheit (1) nach mindestens einem der Ansprüche 4 bis 10, **dadurch gekennzeichnet, dass** die Süßwarenmasse mit einem Überdruck von insbesondere mehr als 1 bar der Massevorlage (25) zugeführt wird.

12. Vorrichtung (30) zum Dosieren einer Süßwarenmasse, **gekennzeichnet durch** eine Mehrzahl von nebeneinander angeordneten Süßwarenmassendosiereinheiten (1) nach mindestens einem der vorhergehenden Ansprüche.

13. Vorrichtung (30) nach Anspruch 12, **dadurch gekennzeichnet, dass** die Süßwarenmassendosiereinheiten (1) so nebeneinander angeordnet sind, dass die Drehachsen (4) ihrer Drehkolben (3) parallel und beabstandet zueinander verlaufen.

14. Vorrichtung (30) nach Anspruch 12 oder 13, **gekennzeichnet durch** mindestens eine flexible Schlauchleitung, **durch** die Süßwarenmasse den Süßwarenmassendosiereinheiten (1) zugeführt wird.

15. Verfahren zum Dosieren einer Süßwarenmasse mittels einer Vorrichtung (30) nach mindestens einem der Ansprüche 12 bis 14, **dadurch gekennzeichnet, dass** die Vorrichtung (30) zum Dosieren relativ zur Umgebung bewegt wird.

## Geänderte Patentansprüche

### Geänderte Patentansprüche gemäss Regel 137(2) EPÜ.

1. Süßwarenmassendosiereinheit (1), **gekennzeichnet durch** einen reversierend drehend angetriebenen Drehkolben (3) zum abwechselnden Befüllen einer Dosierkammer (26) mit Süßwarenmasse und Verdrängen der Süßwarenmasse aus der Dosierkammer (26), wobei
der Drehkolben (3) einen Befüllungstakt zum Befüllen der Dosierkammer (26) mit Süßwarenmasse aufweist, wobei der Drehkolben (3) während des Befüllungstakts in einer ersten Drehrichtung (28) drehend angetrieben ist,
der Drehkolben (3) einen Verdrängungstakt zum Verdrängen der Süßwarenmasse aus der Dosierkammer (26) aufweist, wobei der Drehkolben (3) während des Verdrängungstakts in einer entgegengesetzten zweiten Drehrichtung (29) drehend angetrieben ist, und
der Befüllungstakt und der Verdrängungstakt einen vollständigen Arbeitstakt bilden.

2. Süßwarenmassendosiereinheit (1) nach Anspruch 1, **gekennzeichnet durch**
einen Grundkörper (2), wobei der Drehkolben (3) relativ zu dem Grundkörper (2) drehend angetriebenen ist,
ein Auslassventil (8) mit einem zum abwechselnden Erreichen einer geschlossenen Stellung und einer geöffneten Stellung relativ zu dem Grundkörper (2) und dem Drehkolben (3) drehend angetriebenen Verschlussteil (10), wobei die Dosierkammer (26) **durch** den Grundkörper (2), den Drehkolben (3) und das Verschlussteil (10) begrenzt wird, und
eine Auslassöffnung (16) zum Auslassen der Süßwarenmasse aus der Süßwarenmassendosiereinheit (1), wobei die Auslassöffnung (16) in der geschlossenen Stellung des Verschlussteils (10) von der Dosierkammer (26) getrennt und in der geöffneten Stellung des Verschlussteils (10) mit der Dosierkammer (26) verbunden ist.

3. Süßwarenmassendosiereinheit (1) nach Anspruch 1 oder 2, **gekennzeichnet durch** eine Massevorlage (25), über die Süßwarenmasse der Dosierkammer (26) bereitgestellt wird.

4. Süßwarenmassendosiereinheit (1) nach Anspruch 3 (dieser auf Anspruch 2 rückbezogen), **dadurch gekennzeichnet, dass** der Drehkolben (3) und das Verschlussteil (10) so ausgebildet und angeordnet sind, dass in der geöffneten Stellung des Verschlussteils (10) und auch zu Beginn der Drehung des Verschlussteils (10) von der geschlossenen Stellung in die geöffnete Stellung die Dosierkammer (26) und die Auslassöffnung (16) von der Massevorlage (25) getrennt sind.

5. Süßwarenmassendosiereinheit (1) nach Anspruch 3 (dieser auf Anspruch 2 rückbezogen) oder 4, **dadurch gekennzeichnet, dass** ein Teil der Massevorlage (25) durch den Grundkörper (2), den Drehkolben (3) und das Verschlussteil (10) begrenzt wird und dieser Teil der Massevorlage (25) im Vergleich zu der Dosierkammer (26) auf der anderen Seite des Drehkolbens (3) angeordnet ist.

6. Süßwarenmassendosiereinheit (1) nach mindestens einem der Ansprüche 3 (dieser auf Anspruch 2 rückbezogen) bis 5, **dadurch gekennzeichnet, dass** das Verschlussteil (10) ein Dichtorgan (15) zum Trennen der Dosierkammer (26) und der Auslassöffnung (16) von der Massevorlage (25) besitzt, wobei das Dichtorgan (15) durch eine im Querschnitt kreisbogenabschnittsförmige Oberfläche (11) des Verschlussteils (10) gebildet wird.

7. Süßwarenmassendosiereinheit (1) nach mindestens einem der Ansprüche 3 (dieser auf Anspruch 2 rückbezogen) bis 6, **dadurch gekennzeichnet, dass**
der Grundkörper (2) ein einen Dichtbereich (27) definierendes Dichtorgan (24) zum Begrenzen der Dosierkammer (26) und zum Abdichten der Dosierkammer (26) gegenüber der Massevorlage (25) aufweist, und
der Drehkolben (3) ein korrespondierendes Dichtorgan (6) zum Abdichten der Dosierkammer (26) gegenüber der Massevorlage (25) aufweist, wobei der Drehkolben (3) während des normalen Betriebs der Süßwarenmassendosiereinheit (1) nur innerhalb des Dichtbereichs (27) des Grundkörpers (2) bewegt wird.

8. Süßwarenmassendosiereinheit (1) nach mindestens einem der vorhergehenden Ansprüche, **dadurch gekennzeichnet, dass** der Drehkolben (3) während des Verdrängungstakts mit mindestens zwei unterschiedlich großen Drehgeschwindigkeiten in der zweiten Drehrichtung (29) drehend angetrieben ist.

9. Süßwarenmassendosiereinheit (1) nach mindestens einem der vorhergehenden Ansprüche, **dadurch gekennzeichnet, dass** der Drehkolben (3) mittels eines Servomotors (34) angetrieben ist.

10. Süßwarenmassendosiereinheit (1) nach mindestens einem der Ansprüche 3 bis 9, **dadurch gekennzeichnet, dass** die Süßwarenmasse mit einem Überdruck von insbesondere mehr als 1 bar der Massevorlage (25) zugeführt wird.

11. Vorrichtung (30) zum Dosieren einer Süßwarenmasse, **gekennzeichnet durch** eine Mehrzahl von nebeneinander angeordneten Süßwarenmassendosiereinheiten (1) mit jeweils einem reversierend drehend angetriebenen Drehkolben (3) zum abwechselnden Befüllen jeweils einer Dosierkammer (26) mit Süßwarenmasse und Verdrängen der Süßwarenmasse aus der jeweiligen Dosierkammer (26), insbesondere nach mindestens einem der vorhergehenden Ansprüche.

12. Vorrichtung (30) nach Anspruch 11, **dadurch gekennzeichnet, dass** die Süßwarenmassendosiereinheiten (1) so nebeneinander angeordnet sind, dass die Drehachsen (4) ihrer Drehkolben (3) parallel und beabstandet zueinander verlaufen.

13. Vorrichtung (30) nach Anspruch 11 oder 12, **gekennzeichnet durch** mindestens eine flexible Schlauchleitung, **durch** die Süßwarenmasse den Süßwarenmassendosiereinheiten (1) zugeführt wird.

14. Verfahren zum Dosieren einer Süßwarenmasse mittels einer Vorrichtung (30) nach mindestens einem der Ansprüche 11 bis 13, **dadurch gekennzeichnet, dass** die Vorrichtung (30) zum Dosieren relativ zur Umgebung bewegt wird.
